# EUROPEAN PATENT SPECIFICATION

(11) **EP 1 896 278 B1**
(45) Date of publication and mention of the grant of the patent: **14.04.2010**
(21) Application number: 06755872.6
(22) Date of filing: 27.04.2006
(51) Int. Cl.: B60C 27/18

(54) **FABRIC ANTISKID COVER FOR WHEELS**
TEXTILSTOFF-GLEITSCHUTZÜBERZUG FÜR RÄDER
REVETEMENT ANTIDERAPAGE EN TISSU POUR LES ROUES

(30) Priority: 29.05.2005 IT FI20050033 U; 14.02.2006 IT FI20060041
(43) Date of publication of application: 12.03.2008
(73) Proprietor: Masi, Antonio, 50100 Firenze (IT); Masi, Carlo, 50013 Campi Bisenzio (IT)
(72) Inventor: Masi, Antonio, 50100 Firenze (IT); Masi, Carlo, 50013 Campi Bisenzio (IT)
(74) Representative: Lanzoni, Luciano
(86) International application number: PCT/IB2006/001234
(87) International publication number: WO 2006/129147

(56) References cited:
- WO-A-00/59745
- DE-A1- 1 910 609
- DE-A1- 2 108 386
- GB-A- 262 908
- US-A- 1 890 346
- US-A- 3 335 776

## Description

### Technical Field

The present invention relates to an antiskid cover for wheels, which cover is intended to improve the performance of a vehicle under poor grip conditions, for example in the presence of snow or ice.

### State of the Art

At present, in addition to the traditional snow chains, covers are known made from woven fabric which are superimposed on the wheels to improve the road-holding on slipping grounds, such as those covered by snow or ice.

These types of covers are fastened on the vehicle's wheel with systems allowing elastic retention assembly.

These known solutions, however, have the problem of a relative efficacy under truly difficult conditions, in particular after a period of use, that can be even relatively short, during which the fabric become worn-out rapidly.

These solutions also exhibit a relatively poor stability, with a consequence that the cover has a tendency to deform and come out of the wheel by centrifugal force during the vehicle's run. Other known similar solution according to the preamble of claim 1 are disclosed in US1890346, which discloses a cover made of fabric, rubber or the like and fastened to the sides of the wheel by means of chains; in US3335776, which discloses a disposable traction attachment comprising a flexible fabric tape which is used for covering the wheel and which presents tabs for improving traction on a slipping surface; in DE1610609, which discloses a fabric which can be used on the wheels for improving contact with a surface.

### Description of the Invention

A first object of the invention is therefore to overcome the drawbacks of the known solutions.

A second object is to propose a universal antiskid system easily adaptable to different types of wheel and allowing an easy and safe assembly.

The technical task and the specified objects are substantially obtained by providing an antiskid wheel comprising the technical characteristics set forth in one or more of the appended claims.

Further characteristics and advantages of the present invention will appear more clearly from the following indicative and thus not limiting description of a preferred, but nonexclusive embodiment of the invention, as illustrated in the accompanying drawings, in which:
- Figs. 1 and 2 show external perspective views of a cover, applied to a vehicle's wheel and separate therefrom, respectively;
- Figs. 3 and 4 show external perspective views of a second cover, applied to a vehicle's wheel and separate therefrom, respectively;
- Fig. 5 is cross-section view of a cover
- Figs. 6 to 10 show different embodiments of the tread associated with a cover according to the invention;
- Fig. 11 is a perspective view of an antiskid cover according to the invention;
- Fig. 12 is a top view of the cover of Fig. 11;
- Fig. 13 shows a detail of the device for fixing the cover to the wheel;
- Fig. 14 is a perspective view of an antiskid cover, according to the invention, mounted on a vehicle's wheel;
- Fig. 15 is a prospective view showing the inside of an antiskid cover, according to the invention, mounted on a vehicle's wheel;
- Fig. 16 is a perspective view showing in detail the inner side of the wheel, with the cover mounted thereon, in a preferred embodiment thereof;
- Fig. 17 is a cross-section view of a length of the cover provided with a channel for the passage of the closing cable;
- Fig. 18 shows a preferred embodiment of the side band of the cover;
- Figs. 19a and 19b show respectively the open and closed configurations of a fixing device according to the invention in a preferred embodiment thereof;
- Fig. 20 shows a detail of the device of Figs. 19a, 19b;
- Fig. 21 shows a further embodiment of the fixing device, according to the invention, applied to a wheel-cover; and
- Fig. 22 is an exploded view of the fixing device of Fig. 21.

With reference to the attached figures, an antiskid cover 1, according to the present invention, comprises a support band 2 made from either rigid or elastic fabric to which a tread 3 of plastics, preferably elastomeric material, is applied, and possibly having closing straps 7 on its outer side to facilitate the application of the cover 1 to a wheel 4 while ensuring the stability thereof.

In different embodiments, the tread 3 may be made with rubber being either directly vulcanized on the fabric support or successively applied.

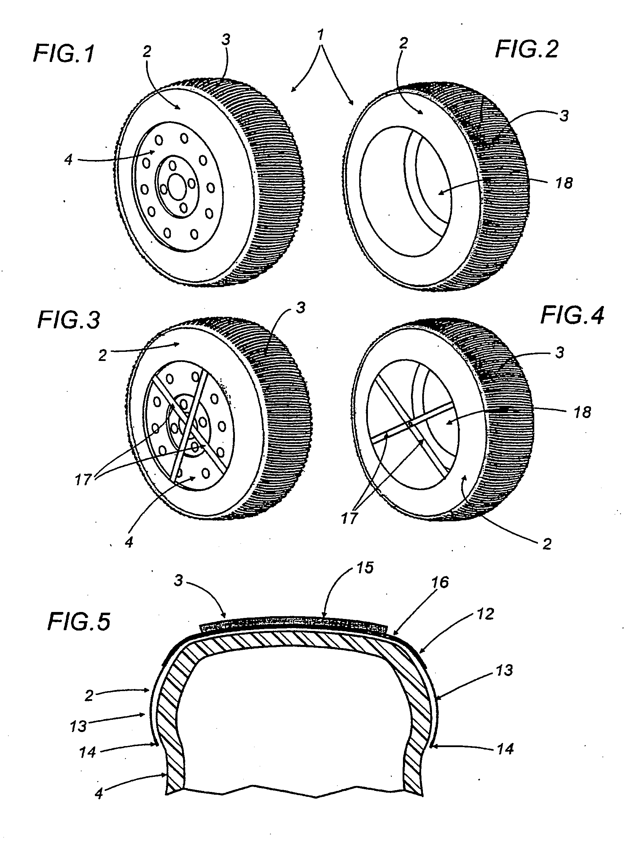

Shown in Fig. 5 is an exemplary structure of the cover 1 in cross-section view.

In the illustrated example, not being part of the present invention, the fabric band 2 is made up of a support central portion 12 whose sides have portions 13 sewn or anyway joined thereto in the form of rings or crowns made from elastic or rigid textile fabric intended to cover the sides of the wheel 4.

Preferably, the side portions 13 are closed by respective beadings 14, preferably of plastic material.

Applied on the central portion 12 of the band 2 is a tread generally indicated with 3 and formed in turn by a central portion 15 consisting of antiskid reliefs protruding from a base layer 16 of the same tread.

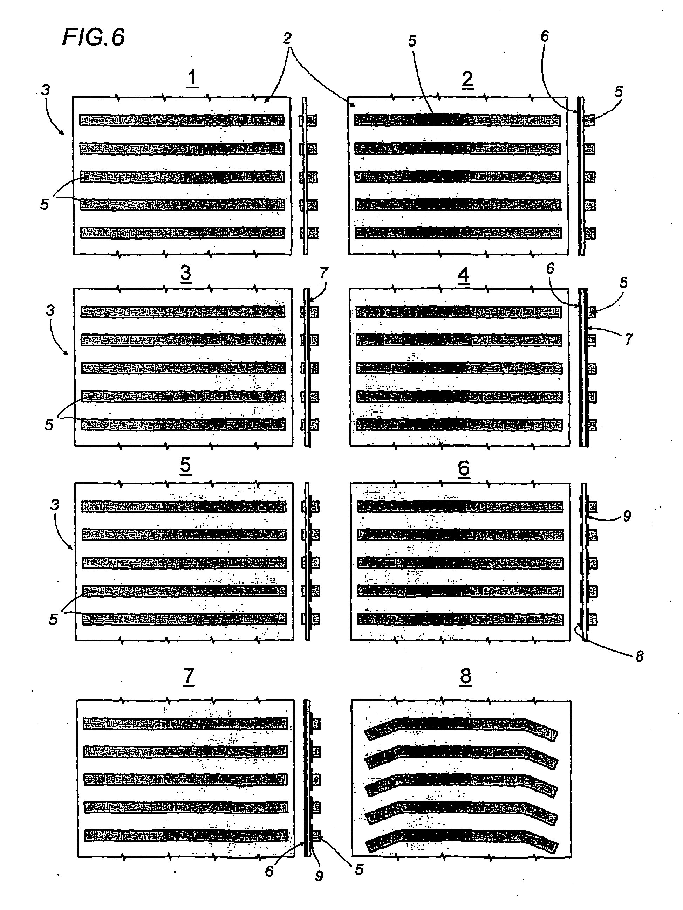

Fig. 6 illustrates the different ways (numbered 1 to 8) which, according to the invention, can be used to apply the tread to the band 2.

In detail, the tread 3 may consist of reliefs 5 (of rectilinear, curved or mixed geometry, depending on the design chosen for the tread) which cross the fabric of the band 2 and are joined to each other only by the support fabric 12, possibly emerging from the inner side in contact with the tire of the wheel 4 in order to change the adhesion of the tread to the wheel.

The reliefs 5 may also be joined to each other by one or two rubber layers 6, 7 which are provided inside and/or outside of the band 2.

Alternatively, the rubber layers connected to the reliefs 5 may consist of discontinuous lengths 8/9 applied respectively inside and/or outside of corresponding regions of the band 2. In this case, the reliefs 5 of the tread are connected to each other only by the support fabric 12.

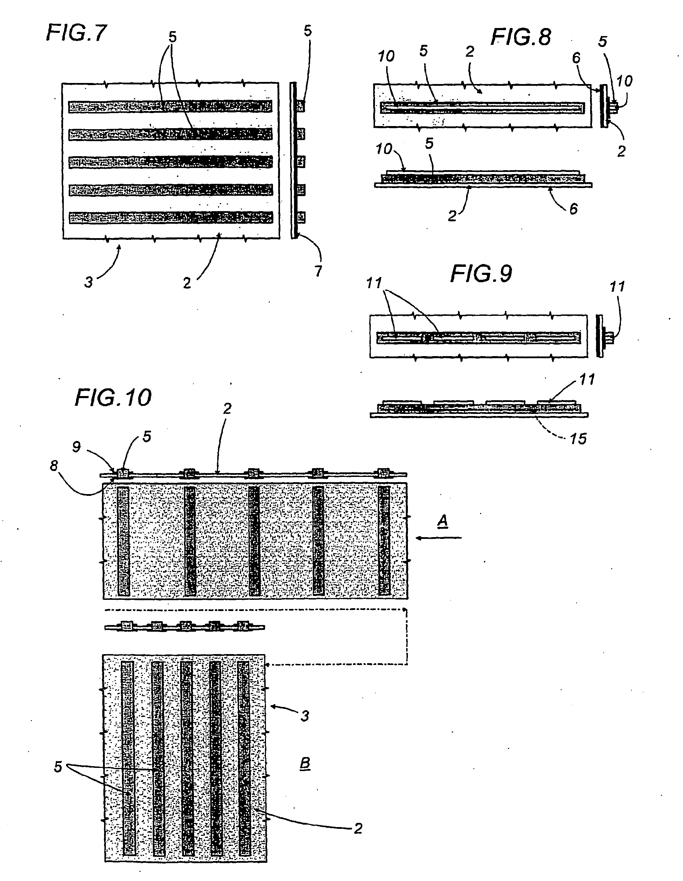

In a further embodiment, as illustrated in Fig. 7, the tread 3 is applied, to the outside of the band 2 without penetrations between the tread's material and the band's fabric.

In order to further improve the antiskid capacity of the cover, there is provided, as illustrated in Figs. 8 and 9, a metal reed or strip 10 being possibly straight or differently shaped, and protruding externally in order to grip, for example, icy road surfaces onto which the rubber could not ensure the necessary road-holding by itself.

In order to ensure the anchorage and the formation of one body with the rubber tread, the reed 10 is incorporated within the reliefs 5 and is retained through suitable connecting windows provided in the reed's part which, upon the mounting stage, remains within the rubber.

The action of the windows prevents the reed from withdrawing out of the rubber seat.

Shown in Fig. 9 is a reed 11 having discontinuous geometry in the part emerging from the rubber, while the reed's part 15 inside the tread may still be continuous to maintain the mechanical resistance thereof.

Fig. 10 illustrates an embodiment of the invention in which the band 2 is made from an elastic support fabric that can be stretched in the direction of the circumferential development of band 2 to take up an extended configuration (A) in which the weft of the fabric become larger to let the tread rubber pass therethrough during the moulding.

Once the tread has been applied, the reliefs 5 making up the tread result thus spaced apart further than when the elastic support returns to the unstressed position (B).

Advantageously, the elasticity of the fabric is of sufficient degree as to allow the wheel's cover to be mounted more easily and make it adhere with a higher force to the same wheel, thereby preventing movements of the same cover onto the wheel. For a best but non-limiting description, it is specified that the fabric which forms the band 2 may be either rigid or elastic, of a weight suitable for use (for example, in the range of 200-400 g/m²), and consisting of any textile, preferably synthetic fibre, possibly including a percentage of elastomer such as rubber or LYCRA (registered trademark) able to improve the elasticity thereof in case of a partially elastic fabric.

As far as the covering of the fabric by the tread is concerned, in the part that will be in contact with the ground, elastomers (rubber) or other plastic materials or metals/rubber composites might be used.

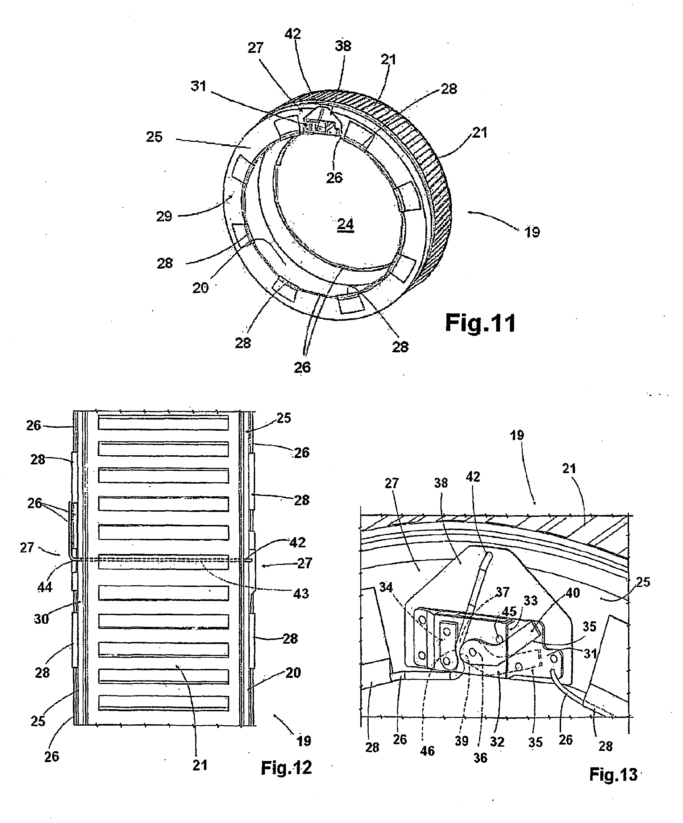

Referring now to Figs. 11 to 20, a preferred embodiment of antiskid cover 19 is described, comprising a central band 20 of either rigid or elastic fabric, to which a tread 21 of plastics, preferably elastomer material, is joined.

In different embodiments, the tread 21 may be constructed with rubber, either directly vulcanized on the fabric support 20 or applied thereto afterwards.

Moreover, the tread may be formed by antiskid reliefs protruding from a base layer 16 of the same tread, and made from elastomers (rubber) or other plastic materials, or rubber-metal composites.

In order to provide a best description, but not in a limitative sense, there is also specified that the fabric of band 20 is of the same type as the solution previously described, and may be either rigid or elastic, and of a weight suitable for use (for example, in the range of 200-400 g/m²), and consisting of any textile, preferably synthetic fibre, possibly including a percentage of elastomer such as rubber or LYCRA (registered trademark) able to improve the elasticity thereof in case of a partially elastic fabric.

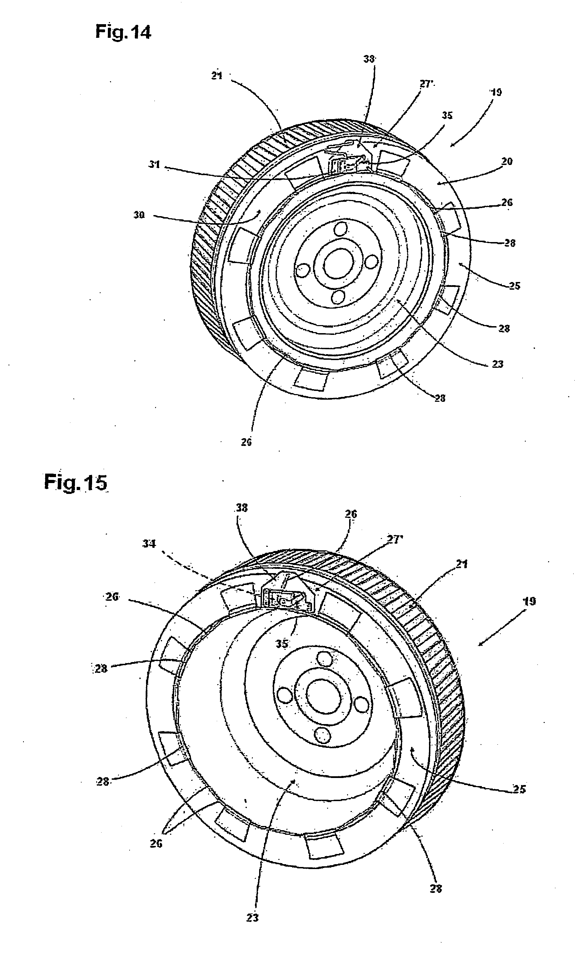

In use, the cover 19 is mounted on a wheel 23 by passing the tire of wheel 23 through an aperture 24 located on the face 29 of cover 19 intended to take up the inside of the wheel (the face in the foreground in Figs. 11 and 14), so as to make the tread 21 correspond to the central region of the tire.

Preferably, the width of the tread 21 is larger than that of the wheel in order to improve the stability of the tire during use.

The complete mounting will be made in a manner conventionally performed for antiskid covers, that is, by slightly rotating the wheel so as to cover also the region firstly in contact with the ground.

Depending on the type of fabric used, the stability of the band 2 onto the wheel is improved by the elastic return of the fabric.

In the illustrated example, the fabric band 20 is made up of a support portion incorporated into the tread, on the sides of which there are provided - sewn thereto, for example - lateral portions or bands 25 made from elastic or rigid fabric, and intended to cover, at least partially, the sides of the wheel.

According to the present invention, in a cover of the type above described, the lateral portions 25 are provided with slits 28 allowing a closing cable 26 to go therethrough for a stable fixing of the cover 19 to a wheel 23 and a quick and easy removal therefrom.

Described with reference to figures 11-20 is a device 27 according to the invention for the fixing and releasing of the cover 1 to/from the wheel 23.

In the illustrated example two devices 27 are provided, one for each side of the cover. It will be appreciated, however, that it is also possible to provide a single fixing device, preferably only on the inner side 29 of the cover.

Each fixing device 27 is made up of a cable-closing choke mechanism that may be preferably fixed to the cover on the outside of the lateral band 25.

The device 27 comprises:
- a first plate 31 fixed to the band 25, possibly to a reinforcement 38 of the latter;
- a second spaced apart plate 32, superimposed on the first plate to create an interspace 33;
- a first choke element 46 located in the interspace 33;
- a second choke element 39 also disposed in the interspace 33 and movable relative to the first;
- a channel 37 defined by the plates 31, 32 and by the surfaces 56 of the elements 34 and 39 of lever 35.

In the described embodiment, the movable element consists of an approximately L-shaped lever pivoting about a pivot 36 and movable between a release position (in dashed line in Fig. 13) in which the channel 37 formed between the elements 34 and 35 is larger than the diameter of cable 26 (or anyway allowing the sliding thereof), and a fixing position in which the width of the channel 37 is considerably smaller than the diameter of cable 26, the latter resulting thus compressed and retained inside the device 27.

The lever 35 has a surface 39 in contact with the cable 26, and a driving portion 40 easily reachable by a user's hand from the outside of the tire, especially when the device 27 is on the upper part of the wheel.

Advantageously, the lever 35-fixing position corresponds to the pull by the user as he/she holds the portion 40 and moves it up into abutment against a stop-of-rotation pin 45, so that the same user finds it easier to exert the force necessary for closing the mechanism.

As above mentioned, it is possible, according to the invention, to provide the said device on one or both the cover's sides.

Illustrated in Figs. 11, 13, 15 is a device 27 applied on the inner side 29 of the cover, whereas Fig. 14 shows a device 27' on the outer side 30 of the same cover.

For the device on the inner side, one end of the pull cable 26 is fastened to a fixed point of the device, while the other end of the cable, after passing through the slits 28 on the inner side of the cover, is made to go through the channel 37 and subsequently through a cover's hole 24 of access to a transverse passage 43 (Fig. 12), and then out of a hole 44 formed on the outer side 30 of the cover.

With this solution, a user who is on the external side of the wheel can easily pull the cable 26 with a hand to tighten the cover onto the wheel and, then, move the lever 35 with the other hand to block the cable.

Advantageously, the cable-return pull facilitates the stability of closure, while the portion of the cable going through the tire is not under tension and does not, therefore, affect the seal. Besides, as this portion of the cable is in no way active, it does not affect the stability of the same cover on the wheel.

In order to make the mounting more reliable and safe, the illustrated embodiment provides also for a second device 27, disposed on the outer side 30 of the cover, as best visible in Fig. 14.

Preferably, the device 27 on this side is in opposite position with respect to the inner device 27', so as to avoid any cover's warpings during the run of the vehicle.

The operation of the second device is the same as device 27 above described, and corresponding parts thereof in Fig. 14 refer to same numerals already indicated.

In this case, the user, after fixing the cover on the inner side, can pull the cable 8 which goes through the device 27 and move the lever 35 to the block position, all by operating from the outside of the wheel with easy access to the closing mechanisms.

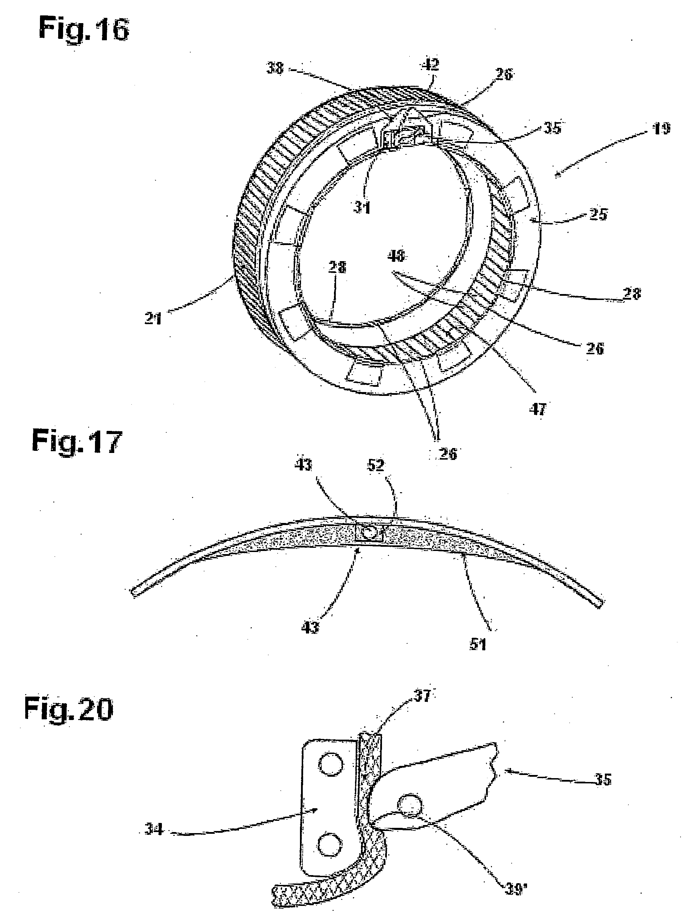

Illustrated in Fig. 16 is a preferred embodiment of the cover, in which the inner side 47 of the tread 21 is provided with crosspieces 48 extending from one side to the other of the tread's width and consisting of metal or rubber reeds having the purpose of transversally limiting the cover's elongation.

In a preferred embodiment, schematically illustrated in Fig. 17, it is also possible to provide a protection sheath for the cable 26 passing through the transverse length 43, so that possible slidings of the cover relative to the wheel will not be transferred onto the blocking device and will not affect the tension of the cable and the stability of the closure.

Preferably, in the example described in Fig. 17, the passage 43 is formed by applying, on the inner side of the tread, a rubber crosspiece 51 provided with a slot 52 disposed in a position corresponding to a void region of the tire 21.

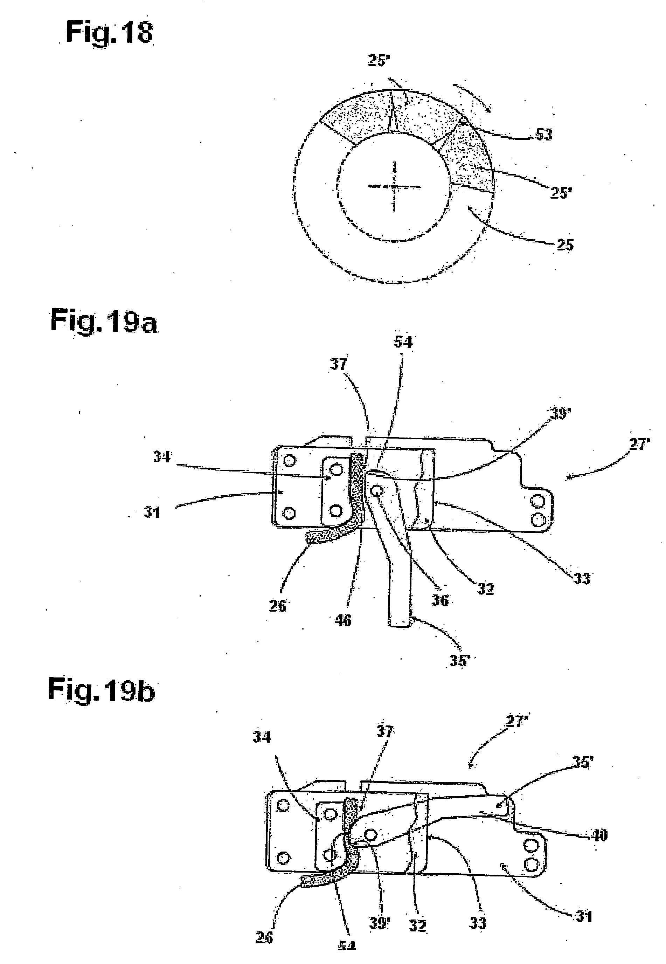

Schematically illustrated in Fig. 18 is a preferred embodiment of the cover's lateral band obtained by applying, on the side margins of tread 21, trapezoidal segments, indicated by 25' in the figure, disposed one after the other along the circumferential development of the tire and each being provided with a slit, on the side of minor radius, to allow the passage of cable 8 and achieve an optimal distribution of the clamping force exerted by the cable 26 on the cover's tread 21.

Preferably, each trapezium 25' has also a region 53 partially overlapping the trapezium located adjacent in anticlockwise direction, so as to prevent the introduction of air during the forward run of the vehicle.

Advantageously, this solution allows a larger opening of the side in which the cover is applied to the wheel and, at the same time, an optimal distribution of the tension on the tread.

Figs. 19a and 19b illustrate a preferred embodiment of the fixing device, according to the invention, designated by 27' and wherein, for the sake of simplicity, corresponding parts already described have been designated with reference numbers equal to those previously indicated.

The device 27' differs from the foregoing because of the presence, on the profile 39 of lever 35, of a slightly projecting elbow 39', as illustrated in greater detail in Fig. 20.

With this solution, when the lever 35 moves from the open configuration of Fig. 19a to the closed configuration of Fig. 19b, in correspondence, of the maximum closeness of elbow 39' to the surface 46 engaging the plate 16, there is a point of maximum compression of cable 26 and an increase of resistance to the rotation, which resistance is overcome through a "snap" movement, perceivable by the user, due to the relative elasticity of cable 26.

Advantageously, a condition of maximum compression of the cable 26 is followed by one of stability in which the same cable is compressed between the surface 46 and a substantially flat or slightly concave region 54, so that the user can feel by touch the attainment of the closing position and, respectively, the opening of the device.

Finally, it is preferred that the cable 26 be of metal core and fabric sheath type, to ensure both the highest clamping force and a relevant grip by device 27/27'.

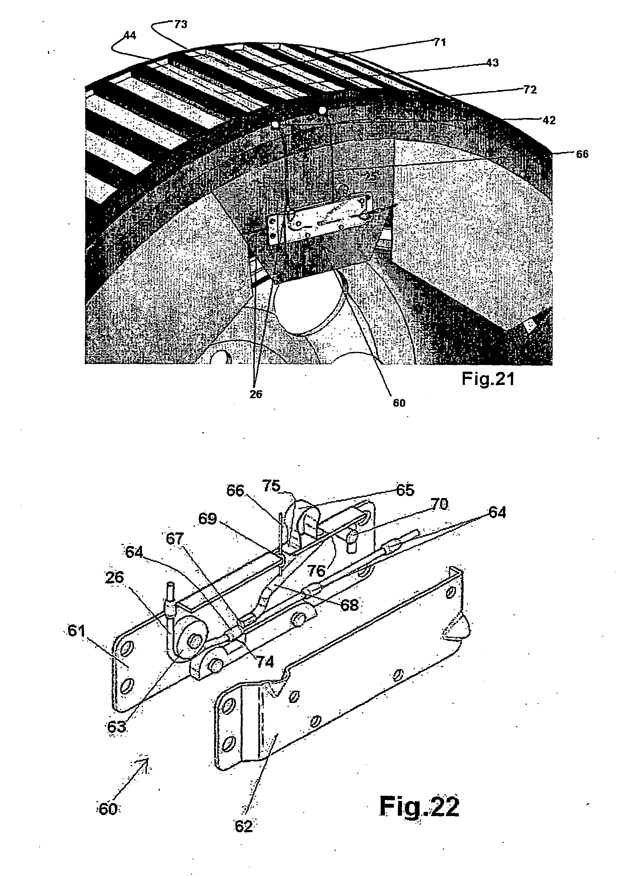

Referring now to Figs. 21-22, a second embodiment of the fixing device 60 applied to a cover according to the invention is described.

The device 60 is substantially made up of a mechanism for blocking the closing cable 26 preferably attached to the cover externally of the lateral band 25 and, more precisely, at a trapezoid segment 25' of a type shown in Fig. 18.

In this solution, formed on the closing cable 26 are "olive" shaped thickenings 64, equidistantly disposed at a predetermined distance of 2 centimetres, for example.

The device 60 comprises:
- a first plate 61 attached to a trapezoid segment 25',
- a second plate 62 overlapping and spaced from the first plate 61 to generate an interspace,
- a roller 63 hinged to the first plate 61 and allowing the closing cable 26 to slide,
- a spring 68 made from metal, mounted at one end to a pivot 70 formed on the first plate 61 and having a second end terminating with a flat surface 67; the spring 68 being able to lock the closing cable by abutting against one of the "olives" 64,
- a second steel cable 66 having an "olive" 69 close to one end thereof, said cable being connected to the approximately central region of the elastic element 69 and disposed within a channel 71 formed entirely through the cover 19,
- an elastic clamping element 65 substantially shaped as an "omega", connected on the first plate 61 and able to counteract the elastic return of the element 68 by abutting against the "olive" 69 formed on the steel cable 66.

One end of the closing cable 26 is attached to a fixed point of the device 60 while the other cable's end, after going through all the slits 28 on the inner side of the cover, is made to pass first through a cover's hole 42 allowing access to a channel 43 and exit afterwards from a hole 44 formed on the outer side 30 of cover 19.

In a similar way, the steel cable is also made to pass first through a cover's hole allowing access to a channel 71 and exit afterwards from a hole 73 formed on the outer side 30 of the wheel.

By this solution, upon mounting the cover 19 onto the wheel, a user who is on the external side of the wheel 23 can easily pull the cable 26 with a hand as far as to lock the same closing cable by moving one of the "olives" 64 thereof into abutment against the flat surface 67 of the elastic element 68 and a tooth 74 of plate 61.

Moreover, upon dismounting the cover 19, a user standing on the external side of the wheel 23 can easily pull the release cable 26 and then vertically displace the elastic element 68 as far as to free the olive 64 and release the closing cable 26.

At this point, the elastic clamping element plays an important role inasmuch as - owing to the abutment between the "olive" 69 formed on the steel cable 66 and one end 75 of the said clamping element 65 - it does not allow the elastic return of element 68 upon the locking stage.

The solution shown in Figs. 21 and 22 has the advantage that a user who stands on the external side of the wheel 23 is able to easily perform the mounting and dismounting as well of the cover 19 by pulling two distinct cables 26/66 each of them having one end emerging from the outer side of cover 19.

Advantageously, both in the mounting and dismounting stages of cover 19 the user can feel, by a surmounting of said "olive"-shaped thickenings 64/69, respectively the locking and releasing of the closing cable 26 and of steel cable 66, so that the same user can realize the occurrence of any malfunction of device 60 due, for example, to freezing of the various parts.

Advantageously, the thickenings 64 are also a cause of cable's jerks and vibrations which allow the user to be aware of different lock levels, and to suitably adapt the cover 19 to the conditions of both new and worn-out tires.

Moreover, the use of a cable 26 fully made of steel and provided with olives 64 makes it possible to reduce the size of the crossing channel 43 and prevent the inevitable wear of a cable coated by a textile sheath.

The invention thus conceived, which is clearly applicable in the industrial field, may also be subjected to several modifications and variants, all of them falling within the inventive scope according to the appended claims.

## Claims

1. Antiskid cover for wheels, comprising a band (2) **made from fabric** in the shape of a ring, with a first inner surface in contact with the wheel and a second outer surface from which an antiskid tread (3) is made to project, said antiskid cover comprising a device **applied to the cover for the fixing and releasing of the cover (1) to/from** the wheel,
**characterized in that the fixing and releasing device is** engaged by at least a cable (26) passing through one or more slits (28) of a lateral band (25), wherein at least a first end of the cable (26) can be easily held by a user who stands on the external side of the wheel and made to slide into a channel (37) intermediate between a first surface (46) of the device and a second surface (39), which second surface can be driven relative to said first surface between a release position away from said first surface and a fixing position, close to the second surface, in correspondence of which the cable (26) is compressed and retained between said first and second surfaces.

2. Cover according to claim 1, wherein said cable exerts a pull, in said fixing position, on the device (27), said pull contributing to maintain said fixing position.

3. Cover according to claim 1, wherein the second ends of the cable (26) is solid to device (27).

4. Cover according to any of claims 1-3, wherein said first and second surfaces (39, 46) are mounted on a plate (31) fixed to said band.

5. Cover according to any of claims 1-4, wherein said first and second surfaces (39, 46) are mounted between two plates (31, 32) fixed to the band (25) and delimiting the channel (37) for the passage of the cable in cooperation with the same surfaces.

6. Cover according to any of claims 1-5, wherein said first surface is fixed, and said second surface (39) makes part of a lever (35) accessible by the user and hinged on a swinging pivot (36).

7. Cover according to claim 6, wherein said lever (35) can be rotated by moving the surface (39) from the cable (26) fixing position, in which the lever is in abutment against a limit stop and the channel passage has the smallest cross-section, to a first releasing position in which the channel has its cross-section larger than the cable's diameter.

8. Cover according to claim 6 or 7, wherein said surface (39) of lever (35) exhibits a slightly protruding elbow (39') to define a point of maximum compression of the cable (26) and a localized increase of resistance, perceivable by the user, to the rotation of the same lever.

9. Cover according to claim 7, wherein said surface (39) of lever (35) exhibits a substantially flat or slightly concave region (54), adjacent to elbow (39'), which reaches into the channel (37) immediately after the elbow (39') during the rotation of lever (35) upon the closing movement.

10. Cover according to any of claims 6-9, wherein said lever can be rotated against the action of a return spring.

11. Cover according to any of claims 1-10, wherein said device (27) is applied at least to the inner part of the cover with respect to the vehicle's wheel.

12. Cover according to claim 11, wherein the cable (26) leaving the channel (37) goes in succession through a hole (42) on the inner side (29) of the cover and a transverse passage (43) and comes out afterwards from a hole (44) formed on the outer side (30) of the cover.

13. Cover according to claim 12, wherein the passage (43) is formed by applying, on the inner side of the tread, a rubber cross-piece provided with a slot (52).

14. Cover according to any of claims 1-13, wherein two devices (27) are applied facing each other on the inner and outer sides of the cover with respect to the vehicle's wheel in correspondence of a same circumferential portion of the cover.

15. Cover according to any of claims 1-14, wherein at least one of said surfaces (46, 39) is provided with anti-skidding means, such as surface knurlings, for example.

16. Cover according to any of claims 1-15, wherein at least a length of the inner side (47) of the tread (22) is provided with contact elements (48) on the outer surface of the wheel.

17. Cover according to any of claims 1-16, wherein said band (25) comprises a series of trapezoid segments (25') applied to the lateral edges of the tread (21) and disposed one after the other along the circumferential development of the tread, each being provided with a slit on the side of minor radius to allow the passage of the cable (26) and achieve an optimal distribution of the clamping force exerted by the cable (26) on the cover.

18. Cover according to claim 17, wherein each trapezium (25') exhibits also a region (53) of partial superimposition on the adjacent trapezium successively disposed in anticlockwise direction, in order to prevent the introduction of air during the forward run of the vehicle.

19. Cover according to claim 1, comprising:
a closing cable (26) provided with thickenings (64)
equidistantly disposed,
- a first plate (61) fixed to a side band (25') of the cover;
- a second plate (62) superimposed and spaced from the first plate (61) to create an interspace for the passage of the cable (26);
- a metal spring (68) fixed by one end (76) to the first plate (61) and having a second end (67) for blocking the closing cable (26) by coming into abutment against one of the thickenings (64);
- a second steel cable (66) connected to the spring (68) to drive it into a cable-releasing position;

20. Cover according to claim 19, comprising a retention element (65) to counteract the spontaneous return of the spring (68) from the release position to the lock position.

21. Cover according to claim 20, wherein the device (60) is applied to the cover on the inner side of the wheel, and said cables (26) and (66) go through channels (43, 71) extending from the inner side to the outer side of the cover to facilitate the user's work.

## Patentansprüche

1. Gleitschutzüberzug für Räder, bestehend aus einem ringförmigen Streifen (2) aus Textilgewebe mit einer ersten inneren Oberfläche, die in Berührung mit dem Rad ist, und einer zweiten äußeren Oberfläche, von der eine rutschhemmende Lauffläche (3) hervorsteht, wobei der Gleitschutzüberzug eine Vorrichtung beinhaltet, die an dem Überzug angebracht ist und zum Fixieren bzw. Lösen des Überzuges (1) an bzw. von dem Rad dient, wobei der Überzug **dadurch gekennzeichnet ist, dass** die Fixier- und Lösevorrichtung mit zumindest einem Seil (26) verbunden ist, das durch einen oder mehrere Schlitze (28) eines seitlichen Streifens (25) geführt ist, wobei zumindest ein erstes Ende des Seils (26) leicht von einer an der Außenseite des Rades stehenden Benutzerperson ergriffen und gleitend in einem Kanal (37) verschoben werden kann, der zwischen einer ersten Oberfläche (46) der Vorrichtung und einer zweiten Oberfläche (39) liegt, wobei die zweite Oberfläche durch entsprechende Ansteuerung relativ zu der ersten Oberfläche bewegt werden kann zwischen einer Freigabestellung, in der sie von der ersten Oberfläche entfernt ist, und einer Fixierstellung, in der sie der ersten Oberfläche angenähert ist und in der das Seil (26) komprimiert und so zwischen der ersten und zweiten Oberfläche festgehalten wird.

2. Überzug nach Anspruch 1, worin das Seil in der genannten Fixierstellung eine Zugwirkung auf die Vorrichtung (27) ausübt, wobei diese Zugwirkung die Beibehaltung dieser Fixierstellung unterstützt.

3. Überzug nach Anspruch 1, worin das zweite Ende des Seils (26) fest mit der Vorrichtung (27) verbunden ist.

4. Überzug nach einem der Ansprüche 1-3, worin die erste und die zweite Oberfläche (46, 39) auf einer Platte (31) montiert sind, die an dem genannten Streifen befestigt ist.

5. Überzug nach einem der Ansprüche 1-4, worin die erste und die zweite Oberfläche (46, 39) zwischen zwei Platten (31, 32) montiert sind, die an dem Streifen (25) befestigt sind und den Kanal (37) für die Durchführung des Seils in Zusammenwirkung mit den Oberflächen selbst begrenzt.

6. Überzug nach einem der Ansprüche 1-5, worin die erste Oberfläche feststehend ist und die zweite Oberfläche (39) Bestandteil eines Hebels (35) ist, auf den die Benutzerperson Zugriff hat und der gelenkbeweglich auf einem Drehpunkt (36) gelagert ist.

7. Überzug nach Anspruch 6, worin der Hebel (35) gedreht werden kann, so dass die Oberfläche (39) aus der Fixierstellung des Seils (26), in der sich der Hebel in Anschlagstellung gegen einen Endlagenstopp befindet und der Kanaldurchgang den kleinsten Querschnitt aufweist, in eine erste Freigabestellung bewegt wird, in der der Kanal einen Querschnitt aufweist, der größer ist als der Seildurchmesser.

8. Überzug nach Anspruch 6 oder 7, worin die Oberfläche (39) des Hebels (35) eine geringfügig vorstehende Abkröpfung (39') aufweist, um einen Punkt der maximalen Kompression des Seils (26) zu bilden und eine von der Benutzerperson spürbare lokalisierte Erhöhung des Widerstandes gegen die Drehung des Hebels zu bewirken.

9. Überzug nach Anspruch 7, worin die Oberfläche (39) des Hebels (35) einen im Wesentlichen flachen oder geringfügig konkaven Bereich (54) aufweist, der an die Abkröpfung (39') angrenzt und der während der Drehung des Hebels (35) bei der Schließbewegung gleich nach der Abkröpfung (39') in den Kanal (37) hineinreicht.

10. Überzug nach einem der Ansprüche 6-9, worin der Hebel gegen die Wirkung einer Rückstellfeder gedreht werden kann.

11. Überzug nach einem der Ansprüche 1-10, worin die Vorrichtung (27) zumindest an dem - bezogen auf das Fahrzeugrad - inneren Teil des Überzuges angebracht ist.

12. Überzug nach Anspruch 11, worin das Seil (26), nachdem es den Kanal (37) verlassen hat, nacheinander durch eine Öffnung (42) auf der Innenseite (29) des Überzuges und einen quer verlaufenden Durchgang (43) geführt wird und danach aus einer Öffnung (44) austritt, die an der Außenseite (30) des Überzuges ausgebildet ist.

13. Überzug nach Anspruch 12, worin der Durchgang (43) gebildet wird, indem auf der Innenseite der Lauffläche ein Querteil aus Gummi angebracht wird, das mit einer Nut (52) versehen ist.

14. Überzug nach einem der Ansprüche 1-13, worin zwei Vorrichtungen (27) einander gegenüber auf der - bezogen auf das Fahrzeugrad - inneren und äußeren Seite des Überzuges und jeweils auf demselben Umfangsabschnitt des Überzuges angebracht sind.

15. Überzug nach einem der Ansprüche 1-14, worin zumindest eine der genannten Oberflächen (46, 39) mit rutschhemmenden Mitteln, wie beispielsweise Rändelungen der Oberfläche, versehen ist.

16. Überzug nach einem der Ansprüche 1-15, worin zumindest ein Längenabschnitt der Innenseite (47) der Lauffläche (21) mit Kontaktelementen (48) auf der Außenoberfläche des Rades versehen ist.

17. Überzug nach einem der Ansprüche 1-16, worin der Streifen (25) eine Reihe trapezförmiger Segmente (25') beinhaltet, die an den Seitenrändern der Lauffläche (21) angebracht, eines nach dem anderen entlang des Umfangs der Lauffläche angeordnet und jeweils mit einem Schlitz auf der Seite das kleineren Radius versehen sind, um die Durchführung des Seils (26) zu ermöglichen und eine optimale Verteilung der von dem Seil (26) auf den Überzug ausgeübten Spannkraft zu erreichen.

18. Überzug nach Anspruch 17, worin jedes Trapez (25') auch einen Bereich (53) der teilweisen Überlagerung mit dem jeweils benachbarten, im Gegenuhrzeigersinn nachfolgenden Trapez aufweist, um das Eintreten von Luft während der Vorwärtsfahrt des Fahrzeuges zu verhindern.

19. Überzug nach Anspruch 1, Folgendes beinhaltend:
- ein Schließseil (26) mit im gleichen Abstand voneinander angeordneten Verdickungen (64);
- eine erste Platte (61), die an einem seitlichen Streifen (25') des Überzuges befestigt ist;
- eine zweite Platte (62), die der ersten Platte (61) überlagert und von dieser beabstandet ist, um einen Zwischenraum zur Durchführung des Seils (26) zu bilden;
- eine Metallfeder (68), die mit einem Ende (76) an der ersten Platte (61) befestigt ist und ein zweites Ende (67) aufweist, das dazu dient, das Schließseil (26) durch Einnehmen einer Anschlagstellung gegen eine der Verdickungen (64) zu blockieren;
- ein zweites Stahlseil (66), das mit der Feder (68) verbunden ist, um deren Bewegung in eine Kabelfreigabestellung anzusteuern.

20. Überzug nach Anspruch 19, der ein Rückhalteelement (65) beinhaltet, um der spontanen Rückkehr der Feder (68) aus der Freigabestellung in die Blockierstellung entgegenzuwirken.

21. Überzug nach Anspruch 20, worin die Vorrichtung (60) auf der Innenseite des Rades am Überzug angebracht ist und die Seile (26) und (66) durch Kanäle (43, 71) geführt sind, die sich von der Innenseite zur Außenseite des Überzuges erstrecken, um der Benutzerperson die Arbeit zu erleichtern.

## Revendications

1. Un revêtement anti-dérapage pour roues, comprenant une bande (2) réalisée en tissu et de forme annulaire, avec une première surface intérieure en contact avec la roue et une deuxième surface extérieure présentant en saillie une bande de roulement (3) antidérapante, ledit revêtement anti-dérapage comprenant un dispositif appliqué sur le revêtement lui-même pour la fixation et le déblocage dudit revêtement (1) sur/de la roue, ledit revêtement étant **caractérisé en ce que** le dispositif de fixation et de déblocage est assujetti par au moins un câble (26) passant à travers une ou plusieurs fentes (28) d'une bande latérale (25), où au moins une première extrémité dudit câble (26) peut être facilement tenue par un utilisateur situé du côté extérieur de la roue et peut coulisser dans un canal (37) intermédiaire entre une première surface (46) du dispositif et une deuxième surface (39), telle deuxième surface pouvant être déplacée par rapport à ladite première surface entre une position de déblocage éloignée de ladite première surface et une position de fixation, proche de la première surface, dans laquelle le câble (26) est comprimé et retenu entre lesdites première et deuxième surfaces.

2. Le revêtement selon la revendication 1,
**caractérisé en ce que** ledit câble exerce une traction, dans ladite position de fixation, sur le dispositif (27), ladite traction contribuant à maintenir ladite position de fixation.

3. Le revêtement selon la revendication 1,
**caractérisé en ce que** la deuxième extrémité du câble (26) est solidaire du dispositif (27).

4. Le revêtement selon l'une quelconque des revendications de 1 à 3, **caractérisé en ce que** lesdites première et deuxième surfaces (46, 39) sont montées sur une plaque (31) fixée à ladite bande.

5. Le revêtement selon l'une quelconque des revendications de 1 à 4, **caractérisé en ce que** lesdites première et deuxième surfaces (46, 39) sont montées entre deux plaques (31, 32) fixées à la bande (25) et délimitant le canal (37) de passage du câble en coopération avec les surfaces elles-mêmes.

6. Le revêtement selon l'une quelconque des revendications de 1 à 5, **caractérisé en ce que** ladite première surface est fixe, et ladite deuxième surface (39) fait partie d'un levier (35) accessible à l'utilisateur et articulé sur un pivot de rotation (36).

7. Le revêtement selon la revendication 6,
**caractérisé en ce que** ledit levier (35) peut être tourné en déplaçant la surface (39) de la position de fixation du câble (26), dans laquelle le levier est en butée contre un arrêt de fin de course et le passage du canal a une section minimale, à une première position de déblocage dans laquelle le canal a une section supérieure au diamètre du câble.

8. Le revêtement selon la revendication 6 ou 7, **caractérisé en ce que** ladite surface (39) du levier (35) présente un coude (39') légèrement saillant pour définir un point de compression maximum du câble (26) et une augmentation localisée de résistance à la rotation du levier lui-même, pouvant être perçue par l'utilisateur.

9. Le revêtement selon la revendication 7,
**caractérisé en ce que** ladite surface (39) du levier (35) présente une zone (54) essentiellement plate ou légèrement concave, adjacente au coude (39'), qui arrive au niveau du canal (37) juste après le coude (39') lors de la rotation du levier (35) pendant le mouvement de fermeture.

10. Le revêtement selon l'une quelconque des revendications de 6 à 9, **caractérisé en ce que** ledit levier peut être tourné contre l'action d'un ressort de rappel.

11. Le revêtement selon l'une quelconque des revendications de 1 à 10, **caractérisé en ce que** ledit dispositif (27) est appliqué au moins sur la partie intérieure du revêtement par rapport à la roue du véhicule.

12. Le revêtement selon la revendication 11,
**caractérisé en ce que** le câble (26) sortant du canal (37) passe en succession à travers un trou (42) sur le côté intérieur (29) du revêtement lui-même et un passage transversal (43) pour sortir ensuite par un trou (44) réalisé sur le côté extérieur (30) dudit revêtement.

13. Le revêtement selon la revendication 12,
**caractérisé en ce que** le passage (43) est obtenu en appliquant, sur le côté intérieur de la bande de roulement, une pièce transversale en caoutchouc pourvue d'une fente (52).

14. Le revêtement selon l'une quelconque des revendications de 1 à 13, **caractérisé en ce que** deux dispositifs (27) sont appliqués l'un en face de l'autre sur les côtés intérieur et extérieur du revêtement par rapport à la roue du véhicule au niveau d'une même portion circonférentielle du revêtement lui-même.

15. Le revêtement selon l'une quelconque des revendications de 1 à 14, **caractérisé en ce qu'**au moins une desdites surfaces (46, 39) est pourvue de moyens antidérapants comme, par exemple, des moletages de surface.

16. Le revêtement selon l'une quelconque des revendications de 1 à 15, **caractérisé en ce qu'**au moins un tronçon du côté intérieur (47) de la bande de roulement (21) est pourvu d'éléments de contact (48) sur la surface extérieure de la roue.

17. Le revêtement selon l'une quelconque des revendications de 1 à 16, **caractérisé en ce que** ladite bande (25) comprend une série de segments trapézoïdaux (25') appliqués sur les bords latéraux de la bande de roulement (21) et disposés les uns après les autres le long du développement circonférentiel de la bande de roulement, pourvus chacun d'une fente sur le côté de petit rayon afin de permettre le passage du câble (26) et d'obtenir une répartition optimale de la force de serrage exercée par le câble (26) lui-même sur le revêtement.

18. Le revêtement selon la revendication 17,
**caractérisé en ce que** chaque trapèze (25') présente aussi une zone (53) de superposition partielle sur le trapèze adjacent disposé successivement dans le sens antihoraire, de manière à empêcher toute introduction d'air pendant la marche avant du véhicule.

19. Le revêtement selon la revendication 1, comprenant :
un câble de fermeture (26) pourvu d'épaississements (64) disposés équidistants,
- une première plaque (61) fixée à une bande latérale (25') du revêtement ;
- une deuxième plaque (62) superposée et espacée de la première plaque (61) pour créer un espace pour le passage du câble (26) ;
- un ressort (68) métallique fixé par une extrémité (76) à la première plaque (61) et ayant une deuxième extrémité (67) servant à bloquer le câble (26) de fermeture en venant en butée contre un des épaississements (64) ;
- un deuxième câble (66) en acier relié au ressort (68) pour l'amener dans une position de déblocage dudit câble.

20. Le revêtement selon la revendication 19, comprenant un élément de retenue (65) pour contrecarrer le retour spontanée du ressort (68) de la position de déblocage à la position de blocage.

21. Le revêtement selon la revendication 20,
**caractérisé en ce que** le dispositif (60) est appliqué sur le revêtement sur le côté intérieur de la roue, et lesdits câbles (26) et (66) passent à travers des canaux (43, 71) s'étendant du côté intérieur au côté extérieur du revêtement pour faciliter le travail de l'utilisateur.
